# EUROPEAN PATENT APPLICATION

(11) **EP 0 925 976 A2**
(43) Date of publication of application: **30.06.1999**
(21) Application number: 98830563.7
(22) Date of filing: 25.09.1998
(51) Int. Cl.: B60J 5/06

(54) **Guide for movable coverings and covering comprising said guide**

(30) Priority: 18.12.1997 IT MI972801
(71) Applicant: Dona', Severino, 20090 Caleppio di Settala, Milano (IT)
(72) Inventor: Dona', Severino, 20090 Caleppio di Settala, Milano (IT)
(74) Representative: Pizzoli, Pasquale Vincenzo

(57) **Abstract**

Guide (1) for movable coverings which comprises an upper portion (7) provided with at least one rail (10) for the sliding of the carriages (12) of the crossbars (13) supporting the upper wall (14) of the movable covering and a lower portion (2) provided with at least one rail (3, 3') for the sliding of carriages (4, 4'), wherein said rail (10) of the upper portion (7) is open towards the outside of the covering and said upper portion (7) of the guide (1) comprises another upwards open rail (17). The present invention also relates to a movable covering comprising said guide (1).

## Description

The present invention relates to a guide for movable coverings, and particularly to a guide for the crossbars supporting the movable coverings which can be fixed to the ground or onto transport means, such as trucks or trailer-trucks. The present invention also relates to a movable covering comprising said guide.

From European Patent EP-621151 granted in the name of the same applicant, is known a guide for movable coverings, comprising a lower portion provided with one or two downwards open rails, which act as a support for the carriages holding up the tarpaulin at the body side and the possible internal uprights. On the contrary, the upper portion of the guide is provided with a rail turned towards the vehicle center line and a hollow structure turned outwards.

Although this kind of guide has remarkable advantages over the previous guides, it still has the disadvantage of being hindering in height and not very strong to bending and tensile stresses if the thickness of the walls is reduced, for example in order to make its structure lighter.

The object of the present invention is therefore to provide a guide free from such disadvantages, that is a guide less hindering in height, stronger to bending and tensile stresses, with the same thickness of the walls. Said object is achieved by a guide whose main characteristics are disclosed in the first claim.

By virtue of the division of the upper portion of the rail into two rails arranged side by side, one being open upwards and the other open laterally towards the outside of the covering, the guide according to the present invention has a lower hindrance in height, resulting in a reduction of the whole movable covering hindrance.

Another advantage of the division of the upper portion of the rail into two rails is the greater stability given to the carriages which slide therein. The walls holding the carriage wheels can therefore be removed, resulting in a reduction of the rolling and sliding friction during the sliding of the crossbars.

According to another aspect of the present invention, the guide is symmetrical about a vertical plane of symmetry and its height and width are about the same, therefore being stronger to bending and tensile stresses, the thickness of the walls being equal, compared to the known guides, which are asymmetrical and have height and width which are different from each other.

Therefore, by virtue of the particular configuration of the guide according to the present invention, the stability of the whole structure of a movable covering comprising the two guides is advantageously improved. Particularly, since the guide rails are turned respectively outwards and upwards, the covering crossbars are able to hold more easily the guides in their position, contributing to the structure stability. This advantage is important when the movable covering is mounted on transport means, because it is stressed by forces acting along various directions during the curves, even sharp, accelerations and decelerations of such means.

Eventually, the rails of the upper portion of the guide according to the present invention are advantageously protected from foreign particles which could block the covering carriages since, owing to their particular arrangement and configuration, said rails are covered by the upper tarpaulin of the movable covering.

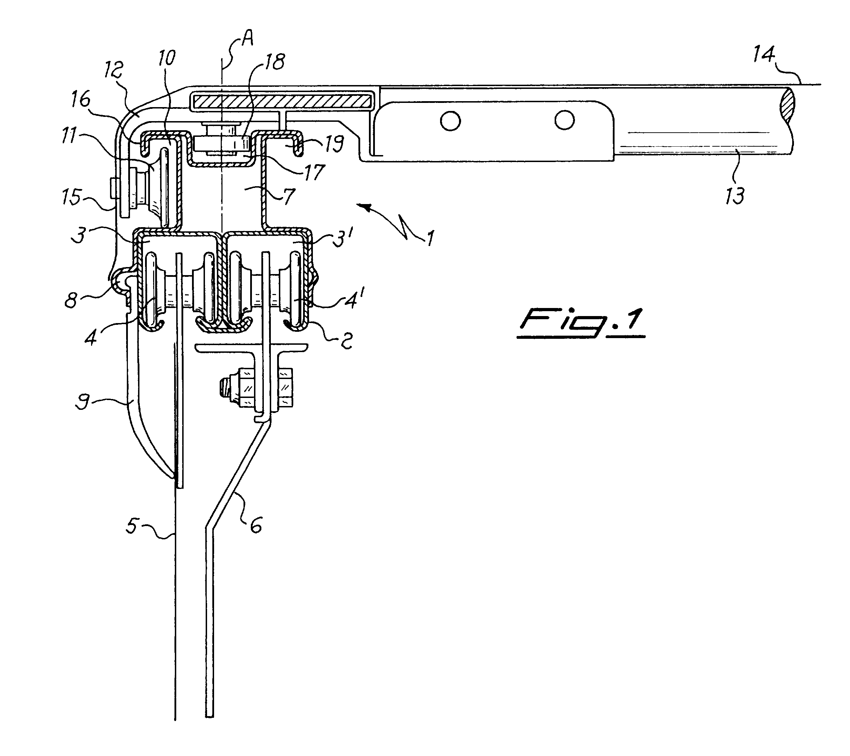

Further advantages and features of the guide according to the present invention will be evident to those skilled in the art from the following detailed description of one embodiment thereof with reference to the accompanying drawing, wherein the only figure shows a partial cross-sectional view of a movable covering comprising a guide according to the present invention.

Referring to that figure, a movable covering, for example for trailer trucks, is shown to comprise in a known way a guide 1 having a lower portion 2 provided with two rails 3, 3' shaped substantially in the form of a downwards open C, wherein the carriages 4, 4' of the side portions of the movable covering, particularly of the tarpaulin 5 covering the body side and the internal uprights 6, slide. The lower portion 2 of guide 1 is preferably made from one single piece by bending one single steel plate.

The upper portion 7 of the guide according to the present invention is also preferably made by bending one single steel plate, which is welded on the upper and side faces of the lower portion 2 near to the external upper corners of rails 3. 3'. The external lower end of the upper portion 7 is preferably provided with a seat 8 for housing the upper portion of a pelmet 9 which serves as a protection of rails 3, 3'.

The upper portion 7 suitably comprises a rail 10 laterally open towards the outside of the covering. One or more wheels 11, having a horizontal axis of rotation, pivoted to the carriages 12 arranged at the ends of the crossbars 13 supporting the tarpaulin 14 which forms the upper portion of the movable covering, can slide inside the rail 10. The side edges 15 of tarpaulin 14 are suitably downwards prolonged and partly overlapping pelmet 9, so as to cover rail 10 and to prevent it from being occluded by foreign particles. Rail 10 is preferably and substantially C-shaped, the free end 16 of the upper horizontal wall being downwards prolonged in order to further protect rail 10 and at the same time to increase the stiffness of guide 1.

The upper wall of the upper portion 7 of guide 1 according to the present invention is suitably bent so as to form a rail 17 preferably and substantially shaped as an upwards open C, wherein one or more wheels 18, having a vertical axis of rotation, pivoted to carriages 12 arranged at the ends of crossbars 13, can slide. Rail 17, being suitably arranged at the side of rail 10, allows precious space to be saved vertically and the hindrance in height of guide 1 to be reduced. Further, the walls of rails 10 and 17, whereon wheels 11 and 18 slide, respectively prevent these wheels to shift in the direction of their axes of rotation, and therefore the guide according to the present invention does not need any holding walls, which disadvantageously increase the friction of wheels 11 and 18.

Inside the upper portion 7 of the guide according to the present invention another rail 19 is arranged, having a mirror-profile with respect to rail 17. This rail, although not used in the present embodiment, allows to obtain a perfect symmetry of the guide about a vertical plane of symmetry A, thereby resulting in an improved mass distribution and a greater bending and tensile strength of the guide. Moreover, this distribution is made more homogeneous because, by virtue of the particular arrangement of rails 10, 17 and 19, the guide height and width are almost the same. Finally, the coincidence of the axis of rotation of wheels 18 with the vertical plane of symmetry A, obtained through the central arrangement of rail 17, allows a greater stability of crossbars 13 which slide in a pair of guides 1, and, as a result, of the movable covering comprising said crossbars 13 and guides 1.

## Claims

1. Guide (1) for movable coverings which comprises an upper portion (7) provided with at least one rail (10) for the sliding of the carriages (12) of the crossbars (13) supporting the upper wall (14) of the movable covering and a lower portion (2) provided with at least one rail (3, 3') for the sliding of carriages (4, 4'), characterized in that said rail (10) of the upper portion (7) is open towards the outside of the covering and that said upper portion (7) of the guide (1) comprises another rail (17) upwards open.

2. Guide (1) according to the preceding claim, characterized in that the outwards open rail (10) of the upper portion (7) is substantially shaped as a sidewards open C.

3. Guide (1) according to the preceding claim, characterized in that the free end (16) of the horizontal upper wall of said rail (10) is downwards prolonged.

4. Guide (1) according to any of the preceding claims, characterized in that the upwards open rail (17) ofthe upper portion (7) is substantially C-shaped.

5. Guide (1) according to any of the preceding claims, characterized in that it is symmetrical about a vertical plane of symmetry (A).

6. Guide (1) according to any of the preceding claims, characterized in that its height and width are substantially the same.

7. Guide (1) according to any of the preceding claims, characterized in that the rail (10) of the upper portion (7) open towards the outside of the covering is arranged at the side of the upwards open rail (17).

8. Guide (1) according to any of the preceding claims, characterized in that the upper portion thereof (7) is made by bending one single steel plate.

9. Movable covering comprising a plurality of supporting crossbars (13) having their ends provided with at least one carriage (12) sliding on a guide (1) according to any of the preceding claims, characterized in that said carriage (12) is provided with at least one wheel (11) having a substantially horizontal axis of rotation, which slides in the rail (10) open towards the outside of the upper portion (7) of the guide (1) and with at least one wheel (18) having a substantially vertical axis of rotation, which slides in the upwards open rail (17) ofthe upper portion (7) of the guide (1).

10. Movable covering according to the preceding claim, characterized in that the axis of rotation of the wheel (18) which slides in the upwards open rail (17) lies on the plane of symmetry (A) of the guide (1).
